# EUROPEAN PATENT APPLICATION

(11) **EP 3 135 469 A1**
(43) Date of publication of application: **01.03.2017**
(21) Application number: 15783408.6
(22) Date of filing: 22.04.2015
(51) Int. Cl.: B29D 30/62, B29C 33/02, B29C 35/02, B29C 45/14, B29C 45/26, B29D 30/54, B60C 11/02

(54) **PNEUMATIC TIRE MANUFACTURING METHOD AND MANUFACTURING APPARATUS**

(30) Priority: 23.04.2014 JP 2014089070; 15.12.2014 JP 2014253224
(71) Applicant: The Yokohama Rubber Co., Ltd., Tokyo 105-8685 (JP)
(72) Inventor: SAKAI, Tomoyuki, Hiratsuka-shi Kanagawa 254-8601 (JP)
(74) Representative: Dilg, Haeusler, Schindelmann Patentanwaltsgesellschaft mbH
(86) International application number: PCT/JP2015/062203
(87) International publication number: WO 2015/163351

(57) **Abstract**

A method of manufacturing a pneumatic tire and a manufacturing device for a pneumatic tire capable for suppressing heat degradation in a base tire and forming a tread portion with high dimensional precision. A rigid inner mold (2) made of metal is brought into contact with a tire inner surface across an area corresponding to a tread portion (TR) of the base tire (BT), the strong rigid inner mold (2) supporting the base tire (BT) from the inner side. In this state, unvulcanized rubber (R) is injected into a cavity (11) of a tread mold (10) that covers an outer circumferential surface of the base tire (BT) corresponding to the tread portion (TR). Via vulcanization of this unvulcanized rubber R, a tread portion (TR) is formed on the outer circumferential surface of the base tire (BT) and the tread portion (TR) is integrated with the outer circumferential surface.

## Description

### Technical Field

The present invention relates to a method of manufacturing a pneumatic tire and a manufacturing device for a pneumatic tire; and particularly relates to a method of manufacturing a pneumatic tire and a manufacturing device for a pneumatic tire capable for suppressing heat degradation in a base tire and forming a tread portion with high dimensional precision.

### Background Art

Manufacturing a retreaded tire involves forming a new tread portion on a base tire, which is an existing pneumatic tire with the rubber of the tread portion removed. Various methods of manufacturing a retreaded tire are known (for example see Patent Document 1). In the method described in Patent Document 1, existing manufacturing equipment is used to apply internal pressure to the base tire by expanding a vulcanization bladder disposed on the inner side of the base tire. In this state, unvulcanized rubber is introduced in a space formed between a tire mold disposed circumferentially outward of the base tire and a circumferential outer surface of the base tire. By vulcanizing the introduced unvulcanized rubber, a tread portion is formed and this tread portion is integrated with the circumferential outer surface of the base tire.

In this method, thermal fluid is supplied into the vulcanization bladder and the vulcanization bladder expands, thus heating the base tire from the inner side. In other words, the vulcanized rubber forming the base tire is heated via the vulcanization bladder from the inner side of the tire. As a result, heat degradation occurs.

Additionally, the injection pressure of the injected unvulcanized rubber is typically much greater than the internal pressure of the expanded vulcanization bladder (single digit MPa range). Accordingly, despite the inner side of the base tire being pressed by the expanded vulcanization bladder, the base tire deforms in an inwardly recessing manner due to the injection pressure of the unvulcanized rubber. This deformation causes a problematic decrease in the dimensional precision of the formed tread portion. In Cited Document 1, the pressure P1 of the unvulcanized rubber in the space in the tread mold is set slightly higher than the internal pressure P2 applied to the base tire (see paragraph 0040). That is, in the invention described in Cited Document 1, because the injection pressure of the unvulcanized rubber cannot be set to a high value, injection time is increased and sufficient dispersion of the unvulcanized rubber sufficiently in the space in the tread mold becomes difficult.

### Citation List

### Patent Literature

Patent Document 1: Japanese Unexamined Patent Application Publication No. 2011-31452A

### Summary of Invention

### Technical Problem

An object of the present invention is to provide a method of manufacturing a pneumatic tire and a manufacturing device for a pneumatic tire; and particularly a method of manufacturing a pneumatic tire and a manufacturing device for a pneumatic tire capable for suppressing heat degradation in a base tire and forming a tread portion with high dimensional precision.

### Solution to Problem

To achieve the object described above, a method of manufacturing a pneumatic tire of the present invention comprises the steps of bringing an expandable/contractible rigid inner mold made of metal into contact with a tire inner surface across an area corresponding to a tread portion of a base tire by disposing the rigid inner mold on an inner side of the base tire; covering an outer circumferential surface of the base tire corresponding to the tread portion with a tread mold; injecting unvulcanized rubber into a cavity of the tread mold; and via vulcanization of the unvulcanized rubber, forming a tread portion on the outer circumferential surface of the base tire and integrating the tread portion with the outer circumferential surface.

Another method of manufacturing a pneumatic tire of the present invention comprises the steps of bringing a cylindrical rigid inner mold made of metal into contact with a tire inner surface across an area corresponding to a tread portion of a base tire by disposing the rigid inner mold on an inner side of the base tire, the rigid inner mold being divisible in a circumferential direction; disposing the base tire in a vulcanization mold together with the rigid inner mold to cover an outer circumferential surface of the base tire corresponding to the tread portion with the vulcanization mold; injecting unvulcanized rubber into a cavity formed between an inner circumferential surface of the vulcanization mold and the outer circumferential surface of the base tire; via vulcanization of the unvulcanized rubber, forming a tread portion on the outer circumferential surface of the base tire and integrating the tread portion with the outer circumferential surface to manufacture a pneumatic tire; removing the manufactured pneumatic tire out of the vulcanization mold together with the rigid inner mold disposed on the inner side of the pneumatic tire; and outside of the vulcanization mold, detaching the rigid inner mold from the inner side of the pneumatic tire.

A manufacturing device for a pneumatic tire of the present invention comprises an expandable/contractible rigid inner mold made of metal disposed on an inner side of a base tire; a tread mold disposed covering an outer circumferential surface of the base tire corresponding to a tread portion; and an injector configured to inject unvulcanized rubber into a cavity of the tread mold; wherein the unvulcanized rubber is injected with the rigid inner mold in contact with a tire inner surface across an area corresponding to the tread portion of the base tire.

Another manufacturing device for a pneumatic tire of the present invention comprises a cylindrical rigid inner mold made of metal divisible in a circumferential direction, the rigid inner mold being disposed on an inner side of a base tire; a vulcanization mold in which the rigid inner mold and the base tire are disposed, the vulcanization mold covering an outer circumferential surface of the base tire corresponding to a tread portion; and an injector configured to inject unvulcanized rubber into a cavity formed between an inner circumferential surface of the vulcanization mold and the outer circumferential surface of the base tire; wherein the unvulcanized rubber is injected into the cavity with the rigid inner mold in contact with a tire inner surface across an area corresponding to the tread portion of the base tire; a tread portion formed by vulcanizing the unvulcanized rubber is integrated with the outer circumferential surface of the base tire to manufacture a pneumatic tire; the rigid inner mold disposed on the inner side of the manufactured pneumatic tire is removed out of the vulcanization mold together with the pneumatic tire and detached from the inner side of the pneumatic tire outside of the vulcanization mold.

### Advantageous Effects of Invention

According to the former method of manufacturing a pneumatic tire and manufacturing device for a pneumatic tire of the present invention, the base tire is supported by the strong rigid inner mold made of metal from the inner side with the rigid inner mold in contact with the tire inner surface across an area corresponding to the tread portion of the base tire. In this state, by injecting the unvulcanized rubber into the cavity of the tread mold, which covers the outer circumferential surface of the base tire corresponding to the tread portion, an inward recess defect caused by the injection pressure of the unvulcanized rubber can be prevented from forming in the base tire. Additionally, the rigid inner mold in contact with the tire inner surface of the base tire is made of metal, thus the rigid inner mold functions as a cooling fin for dissipating heat from the base tire. As a result, temperature rises in the base tire subject to injection of the unvulcanized rubber can be suppressed, which is advantageous in suppressing heat degradation of the vulcanized rubber that forms the base tire.

As the base tire is supported by the rigid inner mold from the inner side, the injection pressure of the unvulcanized rubber can be set to a high value. This allows the injection time to be decreased and sufficient dispersion of the unvulcanized rubber to be easily achieved. All of these advantages also help improve the dimensional precision.

In the former method of manufacturing a pneumatic tire and manufacturing device for a pneumatic tire of the present invention, the rigid inner mold is constituted by a plurality of segments divided in a circumferential direction; and the plurality of segments may be disposed at an expanded diameter position in contact with the tire inner surface across the area corresponding to the tread portion of the base tire. Accordingly, the rigid inner mold is easily disposed on the inner side of the base tire and the rigid inner mold can be easily removed to the outer side of the manufactured pneumatic tire.

According to the later method of manufacturing a pneumatic tire and manufacturing device for a pneumatic tire of the present invention, the base tire is supported by the strong rigid inner mold made of metal from the inner side with the rigid inner mold in contact with the tire inner surface across an area corresponding to the tread portion of the base tire. In this state, by injecting the unvulcanized rubber into the cavity formed between the inner circumferential surface of the vulcanization mold, which covers the outer circumferential surface of the base tire corresponding to the tread portion, and the outer circumferential surface of the base tire, an inward recess defect caused by the injection pressure of the unvulcanized rubber can be prevented from forming in the base tire. Additionally, the rigid inner mold in contact with the tire inner surface of the base tire is made of metal, thus the rigid inner mold functions as a cooling fin for dissipating heat from the base tire. As a result, temperature rises in the base tire subject to injection of the unvulcanized rubber can be suppressed, which is advantageous in suppressing heat degradation of the vulcanized rubber that forms the base tire.

As the base tire is supported by the rigid inner mold from the inner side, the injection pressure of the unvulcanized rubber can be set to a high value. This allows the injection time to be decreased and sufficient dispersion of the unvulcanized rubber to be easily achieved. All of these advantages also help improve the dimensional precision.

Additionally, the operations of disposing the rigid inner mold in the inner side of the base tire and detaching the rigid inner mold from the inner side of the manufactured pneumatic tire can be performed outside of the vulcanization mold. Thus, mechanisms for such operations are not required to be provided in the manufacturing device, this being advantageous in simplifying the manufacturing device.

In the later method of manufacturing a pneumatic tire and manufacturing device for a pneumatic tire of the present invention, upon disposing the base tire in the vulcanization mold together with the rigid inner mold, a cylinder of an injector may be filled with the unvulcanized rubber to be injected, in the cylinder, a plunger being provided. This allows the unvulcanized rubber to be injected to the cavity quickly, thus reducing the effects of unnecessary thermal history on the unvulcanized rubber.

In the former and the later method of manufacturing a pneumatic tire and manufacturing device for a pneumatic tire of the present invention, the unvulcanized rubber may be injected and vulcanized while the inner side of the base tire is cooled through the rigid inner mold. Additionally, the former and the later manufacturing device for a pneumatic tire of the present invention may include a cooling unit configured to cool the rigid inner mold. As a result, temperature rises in the base tire can be actively suppressed, which is advantageous in further suppressing heat degradation of the base tire.

The base tire, for example, may be an existing pneumatic tire with the rubber of the tread portion removed. A studless tire may be manufactured using a rubber compound for studless tires as the unvulcanized rubber. The existing pneumatic tire can be a studless tire;
and
as the unvulcanized rubber, a rubber compound different from a rubber compound used in a tread portion of the existing studless tire may be used. The rubber compound used in the tread portion of the existing studless tire and a rubber compound of the tread portion formed on the outer circumferential surface of the base tire may be different in at least one of: hardness, specific gravity, and friction properties under the same conditions.

### Brief Description of Drawings

- FIG. 1: is an overall schematic view illustrating a portion of a manufacturing device for a pneumatic tire of the present invention viewed in a cross-section.
- FIG. 2: is an explanatory drawing illustrating a rigid inner mold and a tread mold of FIG. 1 viewed in plan view.
- FIG. 3: is an explanatory drawing illustrating the rigid inner mold of FIG. 2 viewed in plan view.
- FIG. 4: is an explanatory drawing illustrating the rigid inner mold with short segments moved to a contracted diameter position viewed in plan view.
- FIG. 5: is an explanatory drawing illustrating the rigid inner mold contracted in diameter with long segments moved to a contracted diameter position viewed in plan view.
- FIG. 6: is an explanatory view illustrating a modified example of the segments viewed in a cross-section.
- FIG. 7: is an explanatory drawing illustrating the configuration of FIG. 1 with unvulcanized rubber being injected into a cavity viewed in a cross-section.
- FIG. 8: is an explanatory drawing illustrating a rigid inner mold of another embodiment viewed in plan view.
- FIG. 9: is a cross-sectional view taken along A-A of FIG. 8.
- FIG. 10: is a vertical cross-sectional view of the left side illustrating a step of removing the rigid inner mold from a manufactured pneumatic tire.
- FIG. 11: is a vertical cross-sectional view of the left side of the rigid inner mold illustrating the step following from that illustrated in FIG. 10.
- FIG. 12: is an overall schematic view illustrating a portion of a manufacturing device for a pneumatic tire of another embodiment of the present invention viewed in a cross-section in a tire width direction.
- FIG. 13: is an explanatory drawing illustrating the manufacturing device of FIG. 12 viewed in plan view.
- FIG. 14: is an explanatory drawing illustrating the rigid inner mold of FIG. 13 viewed in plan view.
- FIG. 15: is an explanatory drawing illustrating the rigid inner mold of FIG. 14 separated and divided viewed in plan view.
- FIG. 16: is an explanatory drawing illustrating the configuration of FIG. 12 with unvulcanized rubber being injected into a cavity viewed in a cross-section in the tire width direction.
- FIG. 17: is an explanatory drawing illustrating a step of disposing a rigid inner mold of another embodiment on the inner side of the base tire viewed in a cross-section in the tire width direction.
- FIG. 18: is an explanatory drawing illustrating how the rigid inner mold of FIG. 17 is disposed on the inner side of the base tire viewed in a cross-section in the tire width direction.
- FIG. 19: is an explanatory drawing illustrating the base tire with the rigid inner mold of FIG. 17 disposed on the inner side thereof viewed in a side cross-section.
- FIG. 20: is an explanatory drawing illustrating a step of disposing a rigid inner mold of yet another embodiment on the inner side of the base tire viewed in a cross-section in the tire width direction.
- FIG. 21: is an explanatory drawing illustrating the step of FIG. 20 viewed in a tire side cross-section.
- FIG. 22: is an explanatory drawing illustrating how the rigid inner mold of FIG. 20 is disposed on the inner side of the base tire viewed in a cross-section in the tire width direction.

### Description of Embodiments

The method of manufacturing a pneumatic tire and the vulcanization device for a pneumatic tire of the present invention will be described below on the basis of embodiments illustrated in the drawings.

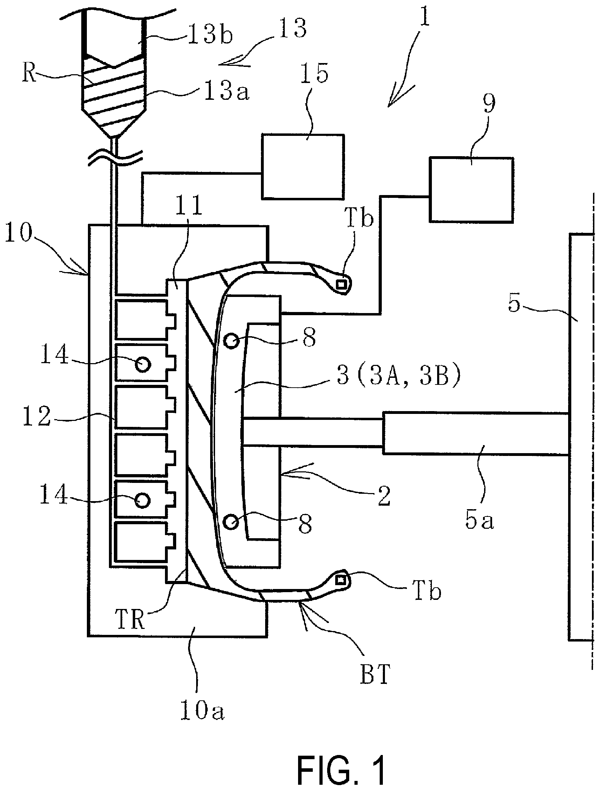

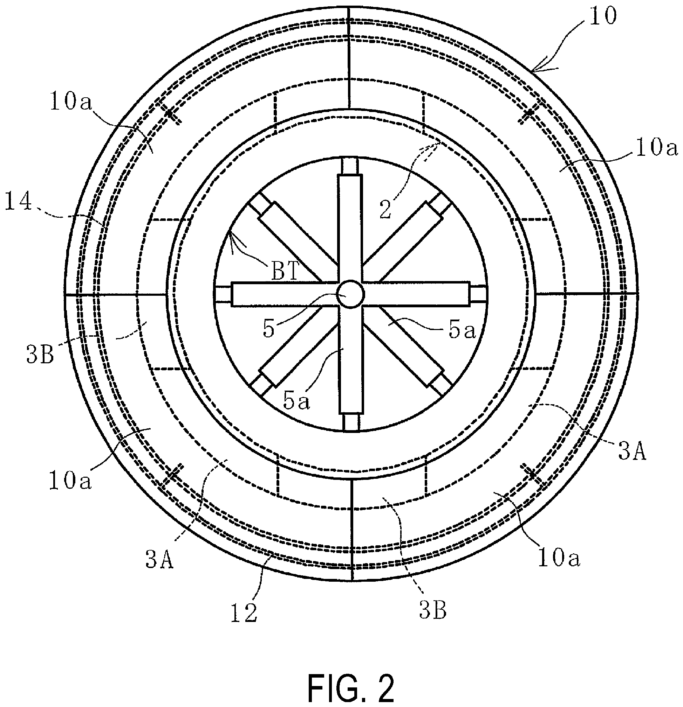

A manufacturing device 1 for a pneumatic tire of the present invention illustrated in FIGS. 1 to 3 includes an expandable/contractible rigid inner mold 2 made of metal disposed on the inner side of a base tire BT; a tread mold 10 disposed covering an outer circumferential surface of the base tire BT, which corresponds a tread portion TR; and an injector 13 configured to inject unvulcanized rubber R into a cavity 11 of the tread mold 10. The manufacturing device 1 of this embodiment further includes cooling units 8, 9 configured to cool the rigid inner mold 2.

Base tire BT refers to a typical pneumatic tire in a state of having no tread portion TR. The base tire BT is formed by removing the rubber of the tread portion TR of a used and existing pneumatic tire. After the rubber is removed, buffing is performed on the surface. Alternatively, the base tire BT may be manufactured as per a typical pneumatic tire manufacturing process but omitting the manufacturing of the tread portion TR. In other words, an unused, new base tire BT may be manufactured. In the present invention, the base tire BT used can be an existing pneumatic tire with the rubber of the tread portion TR removed or a new base tire BT.

The rigid inner mold 2 is constituted by a plurality of segments 3 (3A, 3B) divided in the circumferential direction. The rigid inner mold 2 can be made of a metal such carbon steel, aluminum, aluminum alloy, and the like. In this embodiment, there are two types of segments: long segments 3A having a relatively long circumferential length and short segments 3B having a relatively short circumferential length. The rigid inner mold 2 is constituted by four long segments 3A and four short segments 3B. Both circumferential end surfaces of the short segments are parallel with the expanding/contracting direction. The long segments 3A and short segments 3B are alternately arranged in the circumferential direction. The segments 3A, 3B are attached to cylinders 5a that extend radially from a central shaft 5.

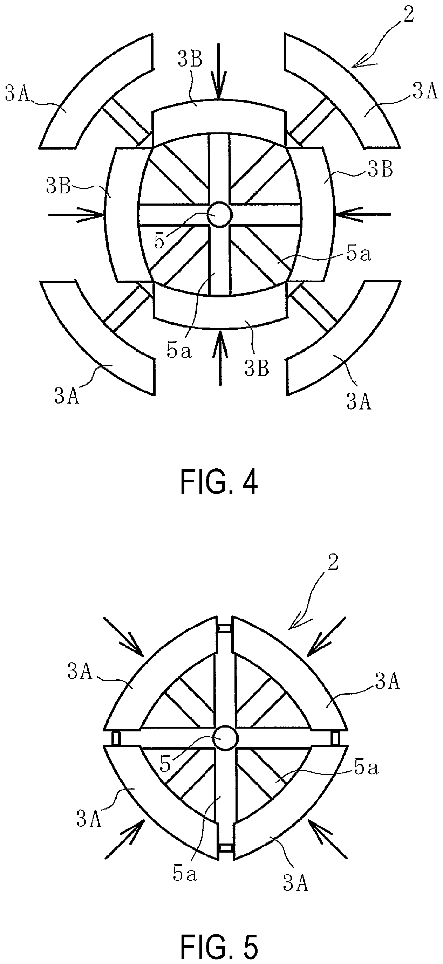

The segments 3 (3A, 3B) are arranged in an annular shape about the central shaft 5. The rigid inner mold 2 can be contracted in diameter by first retracting rods of the cylinders 5a to move the short segments 3B radially inward (contracted diameter position) as illustrated in FIG. 4, and then retracting rods of the cylinders 5a to move the long segments 3A radially inward (contracted diameter position) as illustrated in FIG. 5. For example, the short segments 3B are detached from the cylinders 5a after being moved to the contracted diameter position, and thereafter the long segments 3A are moved to the contracted diameter position.

The rigid inner mold 2 contracted in diameter can be expanded in diameter by first extending the rods of the cylinders 5a to move the long segments 3A radially outward (expanded diameter position), and then extending the rods of the cylinders 5a to move the short segments 3B radially outward (expanded diameter position). In the rigid inner mold 2 expanded in diameter, the outer surfaces of the segments 3A, 3B form a continuous annular shape and are in contact with the tire inner surface across an area corresponding to the tread portion TR of the base tire BT.

The short segments 3B may be all moved at the same time or moved individually. The long segments 3A may also be all moved at the same time or moved individually.

The width dimension of the segments 3A, 3B (dimension in the vertical direction in FIG. 1) is set to be slightly less than the length between opposing bead portions Tb of the base tire BT. Accordingly, the segments 3A, 3B can pass between the pair of bead portions Tb and be smoothly moved to expand or contract.

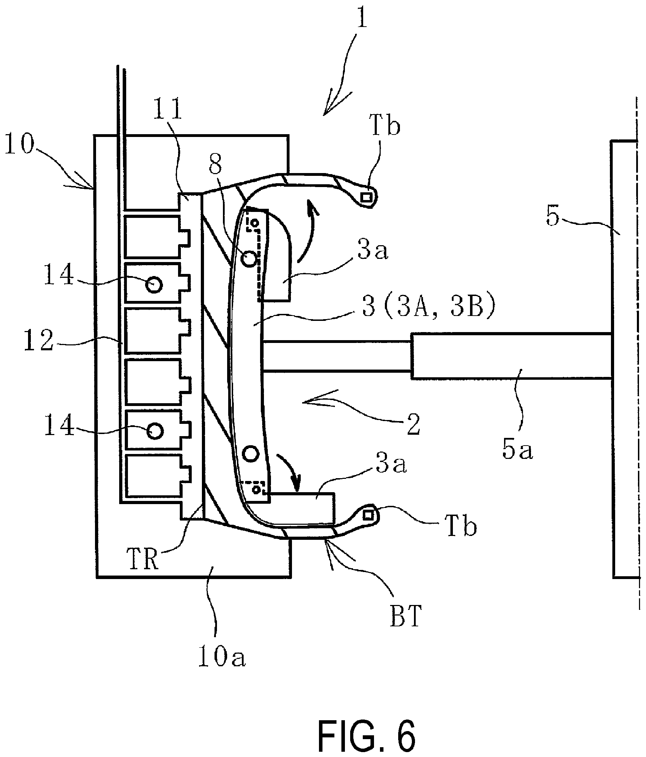

As illustrated in FIG. 6, auxiliary plates 3a may be pivotally disposed on both end portions of the segments 3. The segments 3 are moved to expand or contract between the pair of bead portions Tb in state in which the auxiliary plates 3a are folded in (a state in which the auxiliary plates 3a essentially do not protrude above or below the segments 3). The segments 3 are moved from radially inward to outward and pass between the pair of bead portions Tb. Thereafter, the auxiliary plates 3a are unfolded and come into contact with the inner surface of the base tire BT. The auxiliary plates 3a are maintained in the unfolded state by being locked at the unfolded position. As a result, the tire inner surface can be supported by the rigid inner mold 2 across an even further area.

The cooling unit is constituted by a cooler 9 and a cooling path 8, for example. The cooling path 8 is provided in the rigid inner mold 2 (segments 3). The cooler 9 is configured to supply a cooling medium such as water to the cooling path 8. The cooling unit maintains the temperature of the rigid inner mold 2 (segments 3) at from 40°C to 120°C, for example.

The tread mold 10 of this embodiment is constituted by a plurality of segmented molds 10a divided in the circumferential direction with four segmented molds 10a being assembled in an annular shape. Each segmented mold 10a is formed with the cavity 11 and an introduction path 12 connected to the cavity 11. The surface of the cavity 11 is formed in the shape for forming the tread pattern of the pneumatic tire T to be manufactured. One end portion of the introduction path 12 is connected to an injection outlet of the injector 13.

The other end portion of the introduction path 12 is, for example, connected at a position of the cavity 11 corresponding to a tread land portion or a circumferential groove of the pneumatic tire T to be manufactured. The introduction path 12 preferably branches part-way along into a plurality of paths that connect to the cavity 11.

Additionally, each segmented mold 10a is formed with a heating path 14 connected to a heater 15. The heater 15 is configured to supply a heating medium such as steam, and the supplied heating medium then flows through the heating paths 14 to heat the segmented molds 10a.

The injector 13 includes a cylinder 13a that houses the unvulcanized rubber R while heating it at a predetermined temperature and a plunger 13b configured to extrude the unvulcanized rubber R housed in the cylinder 13a. Forward movement of the plunger 13b causes the unvulcanized rubber R to be injected at a predetermined injection pressure. This injection pressure is, for example, from 10 MPa to 50 MPa.

The unvulcanized rubber R has flow characteristics enabling injection and suffices to be vulcanizable. In such an unvulcanized rubber R, for example, blending ingredients including a diene rubber such as natural rubber, IR, SBR, and BR; a non-diene rubber such as butyl rubber, halogenated butyl rubber, and EPDM; carbon black; oil; an anti-aging agent; a processing aid; a softener; a plasticizer; a vulcanizing agent; a vulcanization accelerator; a vulcanization retarder; and the like are appropriately blended.

Now, an example of steps of the method of manufacturing a pneumatic tire of the present invention using the manufacturing device 1 will be explained.

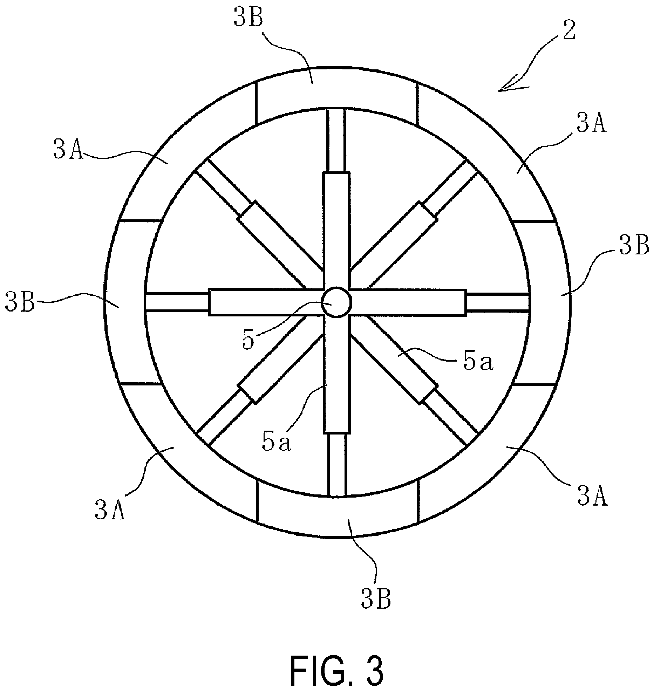

The long segments 3A and the short segments 3B are moved to the expanded diameter position successively and inserted on the inner side of the base tire BT. After insertion, as illustrated in FIG. 3, the rigid inner mold 2 is locked in the expanded diameter state and maintained there. In the rigid inner mold 2 expanded in diameter, the segments 3 are in contact with the tire inner surface across an area corresponding to the tread portion TR of the base tire BT. In other words, the tire inner surface corresponding to the tread portion TR of the base tire BT is rigidly supported by the segments 3 disposed in an annular shape.

The tread mold 10 (segmented molds 10a) is disposed on the outer circumferential side of the base tire BT. The tread mold 10 covers the outer circumferential surface of the base tire BT corresponding to the tread portion TR. Thus, the cavity 11 of the tread mold 10 is sealed off by the outer circumferential surface of the base tire BT forming a closed space.

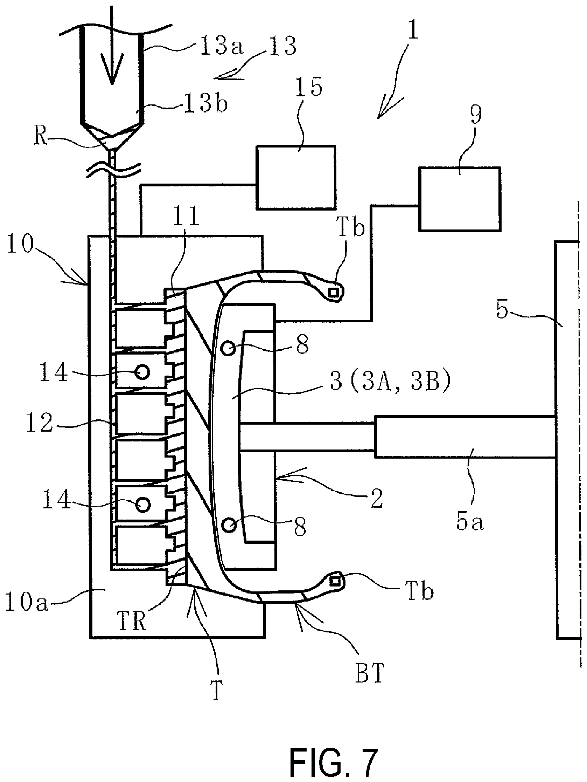

Next, as illustrated in FIG. 7, unvulcanized rubber R is injected from the injector 13 to the cavity 11 of the tread mold 10. The unvulcanized rubber R flows through the introduction path 12 and fills the cavity 11. The unvulcanized rubber R in the cavity 11 is formed into a predetermined shape by the cavity 11. Additionally, the tread mold 10 is heated by the heating medium flowing through the heating path 14 to vulcanize the unvulcanized rubber R. When the unvulcanized rubber R is vulcanized, the tread portion TR made of this vulcanized rubber is formed on the outer circumferential surface of the base tire BT and the tread portion TR is integrated with the outer circumferential surface of the base tire BT by vulcanization bonding. The pneumatic tire T is thus completed.

After completion, the rigid inner mold 2 expanded in diameter is contracted in diameter and removed from the inner side of the base tire BT (manufactured pneumatic tire T) to the outer side.

In the present invention as described above, the rigid inner mold 2 made of metal is brought in contact with the tire inner surface so that the strong rigid inner mold 2 supports the base tire BT from the inner side. By injecting the unvulcanized rubber R into the cavity 11 of the tread mold 10 in this state, an inward recess defect caused by the injection pressure of the unvulcanized rubber R can be prevented from forming in the base tire BT.

Additionally, the rigid inner mold 2 in contact with the tire inner surface of the base tire BT is made of metal, thus the rigid inner mold 2 functions as an air-cooling cooling fin for dissipating heat from the base tire BT. As a result, temperature rises in the base tire BT can be suppressed, which is advantageous in suppressing heat degradation of the vulcanized rubber that forms the base tire BT.

In this embodiment, the unvulcanized rubber R can be injected and vulcanized while the inner side of the base tire BT is being cooled by the cooling unit 8, 9 through the rigid inner mold 2. As a result, temperature rises in the base tire BT can be actively suppressed, which is advantageous in further suppressing heat degradation of the base tire BT.

The base tire BT is supported on the inner side by the rigid inner mold 2 enabling the injection pressure of the unvulcanized rubber R to be set to a value higher than that of when the base tire BT is supported on the inner side by a vulcanization bladder. As such, the injection time can be decreased and tire productivity improved. Additionally, sufficient dispersion of the unvulcanized rubber R is easily achieved throughout the entire area of the cavity 11. Thus, this embodiment is advantageous for molding complicated patterns. All of these advantages also help improve the dimensional precision.

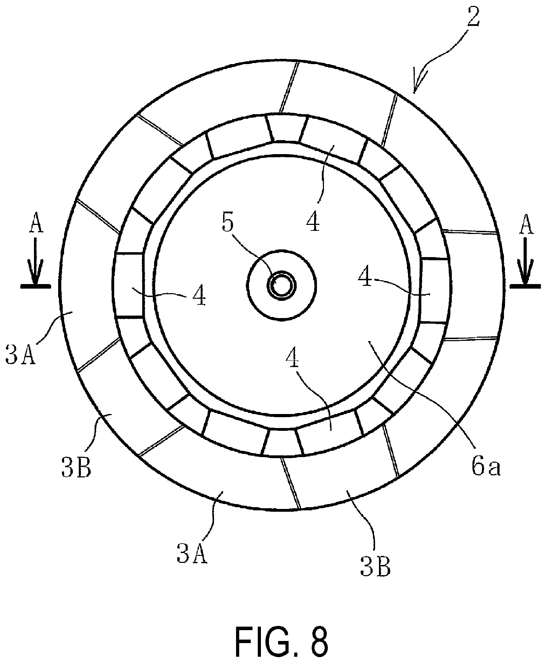

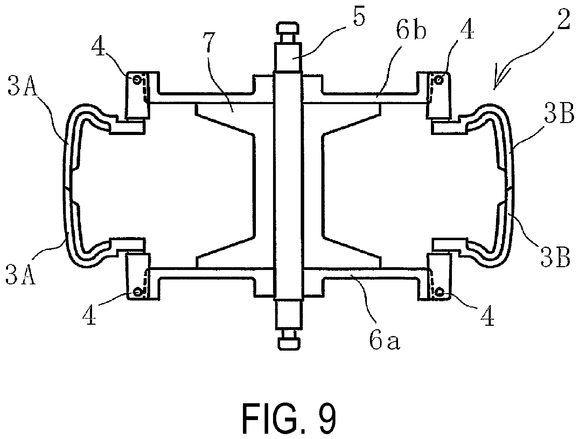

The rigid inner mold 2 illustrated in FIG. 8 and FIG. 9 may be used. This cylindrical rigid inner mold 2 is constituted by a plurality of segments 3 divided in the circumferential direction (long segments 3A, short segments 3B). Additionally, the cylindrical circumferential surface of the segments 3 are divided in half in the width direction.

These segments 3 are fixed to the circumferential edge portions of disc-shaped opposing support plates 6a, 6b via rotation mechanisms 4 to form a cylindrical shape. In other words, a cylindrical circumferential surface is formed by one of the segments 3 divided in half in the width direction being arranged in an annular shape conforming to the circumferential edge portion of the support plate 6a, the support plate 6a being one of the opposing support plates 6a, 6b, and a cylindrical circumferential surface is formed by the other of the segments 3 divided in half in the width direction being arranged in an annular shape conforming to the circumferential edge portion of the other support plate 6b.

A central shaft 5 is fixed passing through the center position of the opposing support plates 6a, 6b. The pair of support plates 6a, 6b are fixed to the central shaft 5 via a support rib 7 fixed to the outer circumferential surface of the central shaft 5.

In such a manner, the rigid inner mold 2 constituted by the plurality of segments 3 formed in a cylindrical shape is moved to expand or contract in diameter by rotating the segments 3 with the rotation mechanisms 4 as the center of rotation. The rigid inner mold 2 is pivotally supported by the central shaft 5 and attached in a holding base of the manufacturing device 1.

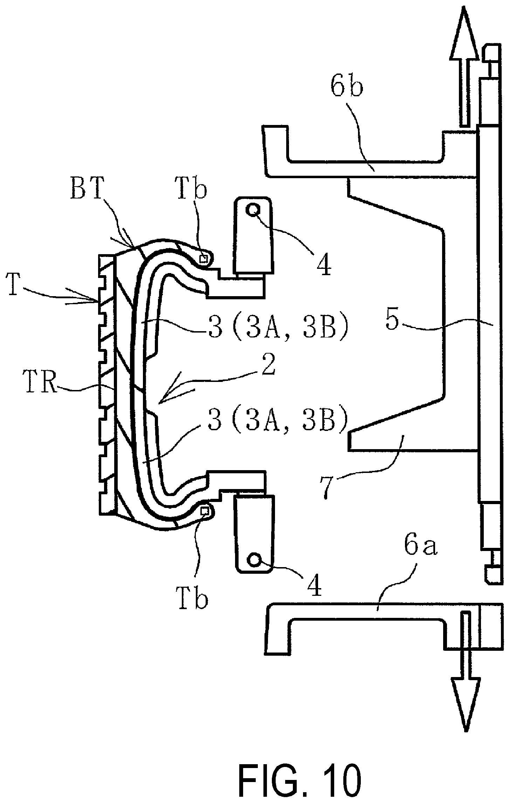

To detach the rigid inner mold 2 from the manufactured pneumatic tire T, first, as illustrated in FIG. 10, the rotation mechanisms 4 and the respective support plates 6a, 6b are disengaged. In this state, one of the support plates 6a is detached from the central shaft 5, then this support plate 6a and the other support plate 6b fixed to the rotation shaft 5 are moved to the outer side of the manufactured pneumatic tire T.

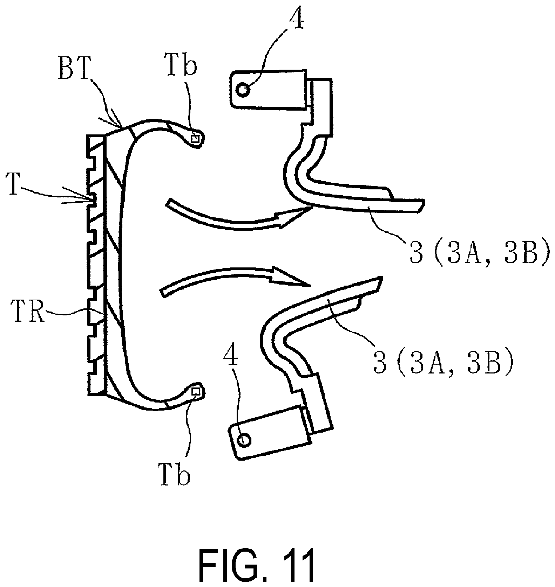

Next, as illustrated in FIG. 11, the segments 3 to one side in the width direction (the upper side in FIG. 11) are rotated inward of the tire about the rotation mechanism 4 so that the rigid inner mold 2 is contracted in diameter. Thereafter, the segments 3 to the other side in the width direction (the lower side in FIG. 11) are rotated inward of the tire about the rotation mechanism 4 so that the rigid inner mold 2 is contracted in diameter. In such a manner, the segments 3 are moved to the outer side of the pneumatic tire T and detached after being rotated inward of the tire. To expand in diameter and assemble the rigid inner mold 2 in a cylindrical shape on the inner side of the base tire BT, the steps of dividing the rigid inner mold 2 illustrated in FIG. 10 and FIG. 11 may be performed in reverse. In such a manner, the rigid inner mold 2 can be easily disposed on the inner side of the base tire BT, and the rigid inner mold 2 can be easily removed to the outer side of the manufactured pneumatic tire T.

Additionally, a studless tire may be manufactured using a rubber compound for studless tires as the unvulcanized rubber R. Studless tires are more susceptible to wear in the tread portion TR than typical pneumatic tires. By employing the present invention, a studless tire with a new tread portion TR can be obtained without the need for a user to purchase a new studless tire. In such a case, instead of the base tire BT being a studless tire with the rubber of the tread portion TR removed, a typical existing pneumatic tire with the rubber of the tread portion TR removed may be used. As a base tire BT is used to manufacture a new studless tire, resource saving and energy saving are achieved. In addition, heat degradation is suppressed to a greater degree than with conventional retreading technology, thus the tire can have a long service life.

In cases of using an existing studless tire with the rubber of the tread portion TR removed as the base tire BT, a rubber compound different from the rubber compound used in the tread portion TR of the existing studless tire may be used as the unvulcanized rubber R. Rubber compounds of tread portions TR of studless tires are improving every year and new versions and rubber types are continuously developed. As such, a studless tire containing an enhanced rubber compound in the tread portion TR can be obtained without a user purchasing a new studless tire containing the improved rubber compound in the tread portion TR. In other words, a studless tire containing the newly developed rubber compound in the tread portion TR can be obtained without the user purchasing a new studless tire every year.

Rubber compounds of tread portions TR of studless tires are enhanced every year in terms of hardness, specific gravity, friction properties, and the like under the same conditions. In cases of using an existing studless tire with the rubber of the tread portion TR removed as the base tire BT, the rubber compound used in the tread portion TR of the existing studless tire and the rubber compound of the tread portion TR formed on the outer circumferential surface of the base tire BT may be different in at least one of the properties including hardness, specific gravity, and friction properties under the same conditions. In other words, these properties are changed to enhance the performance of the studless tire. Note that a plurality of or all of these properties may be changed.

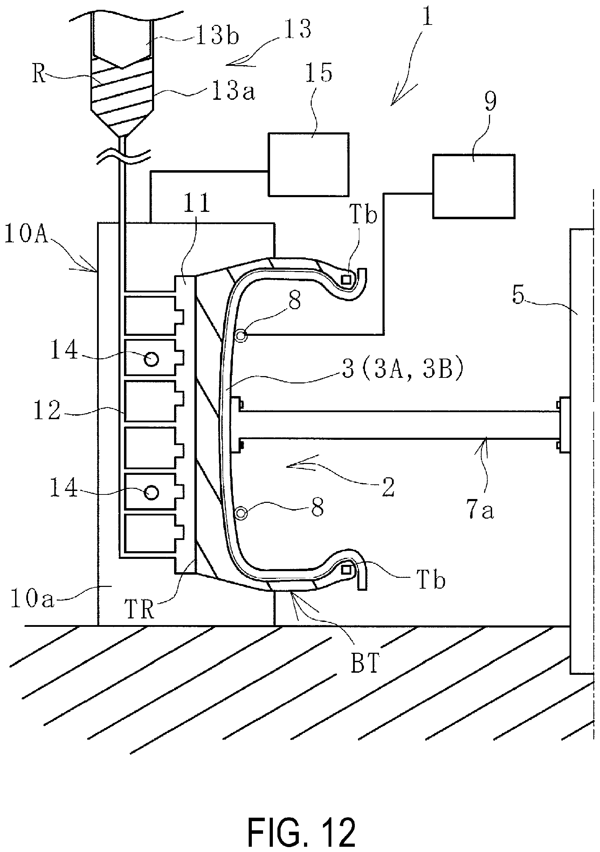

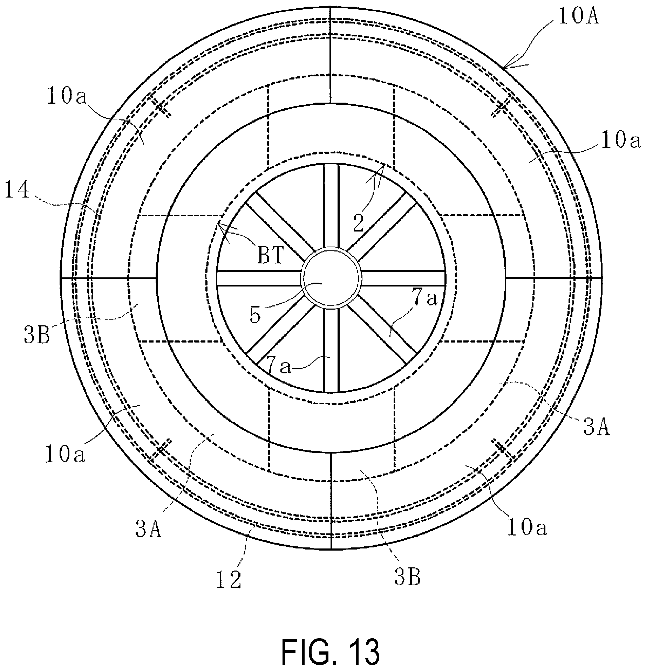

FIGS. 12 and 13 illustrate the manufacturing device 1 for a pneumatic tire of another embodiment. This manufacturing device 1 includes a cylindrical rigid inner mold 2 made of metal disposed on the inner side of the base tire BT, a vulcanization mold 10A in which the rigid inner mold 2 and the base tire BT are disposed, and an injector 13. The manufacturing device 1 of this embodiment further includes cooling units 8, 9 configured to cool the rigid inner mold 2 disposed in the vulcanization mold 10A.

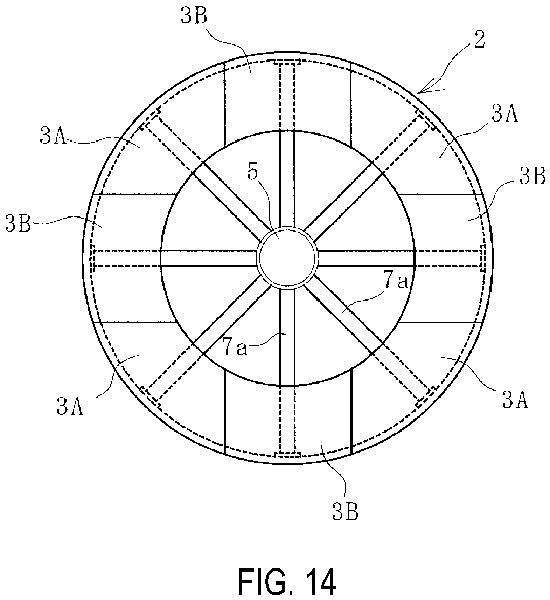

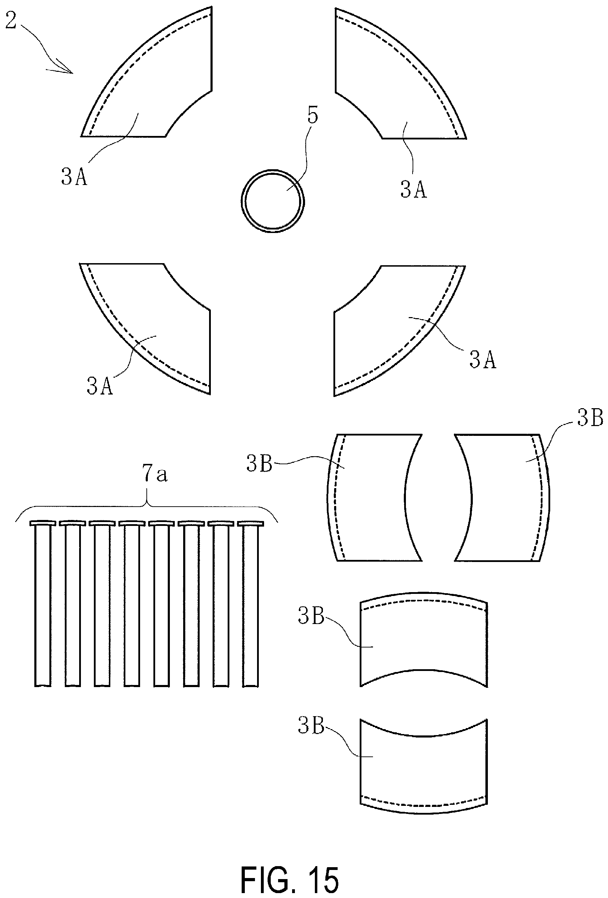

As illustrated in FIGS. 14 and 15, the rigid inner mold 2 is divisible in the circumferential direction into a plurality of segments 3 (3A, 3B), these segments when assembled forming a cylindrical shape. The rigid inner mold 2 can be made of a metal such carbon steel, aluminum, aluminum alloy, and the like. In this embodiment, there are two types of segments: long segments 3A having a relatively long circumferential length and short segments 3B having a relatively short circumferential length. The rigid inner mold 2 is constituted by four long segments 3A and four short segments 3B. Both circumferential end surfaces of the short segments 3B are parallel when viewed in a plan view. The long segments 3A and short segments 3B are alternately arranged in the circumferential direction.

The segments 3A, 3B are attached to support arms 7a that extend radially from the central shaft 5. The segments 3A, 3B, the central shaft 5, and the support arms 7a are each individually separable. In other words, the structure of the rigid inner mold 2 is not expandable/contractible but instead subdivisible via the individual separation and division of the segments 3. The segments 3A, 3B adjacent in the circumferential direction may be coupled on the inner circumferential side via an appropriate coupling member if necessary.

The rigid inner mold 2 is formed by assembling the separated and divided segments 3A, 3B into a cylindrical shape and coupling the segments 3A, 3B to the central shaft 5 and the support arms 7a. In the formed rigid inner mold 2, the outer surfaces of the segments 3A, 3B form a continuous annular shape and are in contact with the tire inner surface across an area corresponding to the tread portion TR of the base tire BT.

The vulcanization mold 10A is constituted by a plurality of segmented molds 10a divided in the circumferential direction. In this embodiment, four segmented molds 10a are assembled in an annular shape. The segmented molds 10a can be moved in the radial direction; when moved inward in the radial direction, the vulcanization mold 10A closes, and when moved outward in the radial direction, the vulcanization mold 10A opens.

The closed vulcanization mold 10A covers the outer circumferential surface of the base tire BT, this surface corresponding to the tread portion TR of the base tire BT with the rigid inner mold 2 disposed inward thereof. The cavity 11 is formed between the inner circumferential surface of the vulcanization mold 10A and the outer circumferential surface of the base tire BT.

Each segmented mold 10a is formed with an inner circumferential surface forming the cavity 11 and an introduction path 12 connected to the formed cavity 11. The inner circumferential surface of the segmented molds 10a forming the cavity 11 is formed in the shape for forming the tread pattern of the pneumatic tire T to be manufactured. One end portion of the introduction path 12 is connected to an injection outlet of the injector 13.

The other end portion of the introduction path 12 is, for example, connected at a position of the inner circumferential surface of the segmented molds 10a corresponding to a tread land portion or a circumferential groove of the pneumatic tire T to be manufactured. The introduction path 12 preferably branches part-way along into a plurality of paths that connect to the cavity 11.

Additionally, in a similar manner to that of the embodiment described above, each segmented mold 10a is formed with a heating path 14 connected to a heater 15. The segmented molds 10a are heated in a similar manner to that of the embodiment described above. The injector 13 has specifications similar to that of the injector 13 used in the embodiment described above and is similarly configured to inject the unvulcanized rubber R at a predetermined injection pressure. The unvulcanized rubber R has specifications similar to that of the unvulcanized rubber R used in the embodiment described above. The cooling unit has specifications similar to that of the cooling unit used in the embodiment described above and similarly maintains the temperature of the rigid inner mold 2 (segments 3) in a predetermined temperature range.

Now, an example of steps of the method of manufacturing a pneumatic tire using this manufacturing device 1 will be explained.

Outside of the vulcanization mold 10A, the segments 3 are inserted on the inner side of the base tire BT and assembled in a cylindrical shape to dispose the rigid inner mold 2 on the inner side of the base tire BT. By this, the segments 3 are brought in contact with the tire inner surface across an area corresponding to the tread portion TR of the base tire BT. In other words, the tire inner surface corresponding to the tread portion TR of the base tire BT is rigidly supported by the segments 3 disposed in a cylindrical shape.

Next, the base tire BT is disposed in the opened vulcanization mold 10A together with the rigid inner mold 2. Then, vulcanization mold 10A is closed and the outer circumferential surface of the base tire BT corresponding to the tread portion TR is covered by the vulcanization mold 10A. By this, as illustrated in FIG. 12, the cavity 11 is formed between the inner circumferential surface of the vulcanization mold 10A and the outer circumferential surface of the base tire BT.

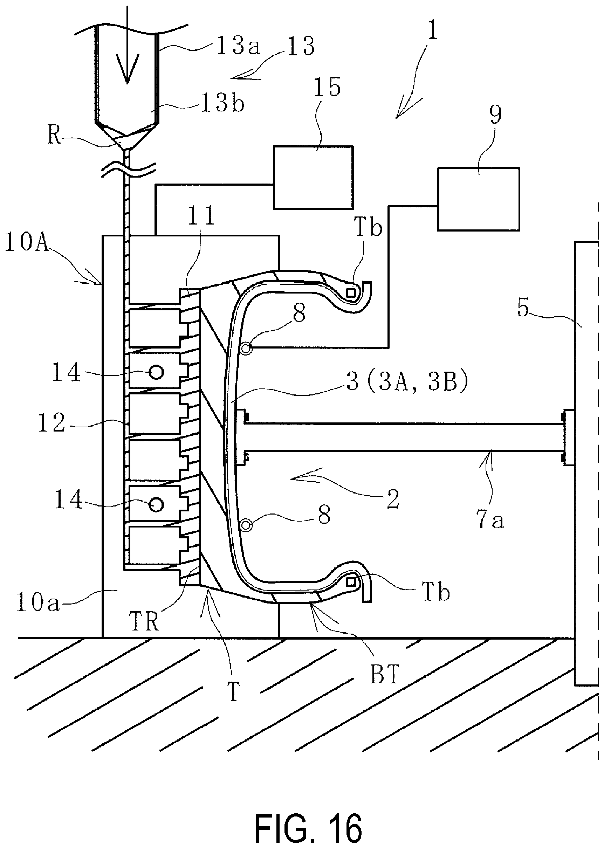

Next, as illustrated in FIG. 16, unvulcanized rubber R is injected from the injector 13 to the cavity 11, the unvulcanized rubber R flowing through the introduction path 12 and filling the cavity 11. For example, upon disposing the base tire BT in the vulcanization mold 10A together with the rigid inner mold 2, the cylinder 13a of the injector 13 is filled with the unvulcanized rubber R to be injected. This allows the unvulcanized rubber R to be injected to the cavity 11 quickly, thus reducing the effects of unnecessary thermal history on the unvulcanized rubber R. Accordingly, the unvulcanized rubber R can be injected without having its flowability decreased, which is more advantageous in achieving sufficient dispersion of the unvulcanized rubber R throughout the entire area of the cavity 11.

The unvulcanized rubber R in the cavity 11 is formed into a predetermined shape by the cavity 11. Then, the injected unvulcanized rubber R is vulcanized in the vulcanization mold 10A heated by the heating medium flowing through the heating path 14.

When the unvulcanized rubber R is vulcanized, the tread portion TR made of this vulcanized rubber is formed on the outer circumferential surface of the base tire BT and the tread portion TR is integrated with the outer circumferential surface of the base tire BT by vulcanization bonding. The pneumatic tire T is thus completed.

Next, the pneumatic tire T with the rigid inner mold 2 disposed on the inner side is removed to the outside of the vulcanization mold 10A. Thereafter, outside of the vulcanization mold 10A, the rigid inner mold 2 on the inner side of the pneumatic tire T is detached from the inner side by separating and dividing the segments 3.

In the present invention as described above, the rigid inner mold 2 made of metal is brought in contact with the tire inner surface so that the strong rigid inner mold 2 supports the base tire BT from the inner side. By injecting the unvulcanized rubber R into the cavity 11 in this state, an inward recess defect caused by the injection pressure of the unvulcanized rubber R can be prevented from forming in the base tire BT.

Additionally, the rigid inner mold 2 in contact with the tire inner surface of the base tire BT is made of metal, thus the rigid inner mold 2 functions as an air-cooling cooling fin for dissipating heat from the base tire BT. As a result, temperature rises in the base tire BT can be suppressed, which is advantageous in suppressing heat degradation of the vulcanized rubber that forms the base tire BT.

In this embodiment, the unvulcanized rubber R can be injected and vulcanized while the inner side of the base tire BT is being cooled by the cooling unit 8, 9 through the rigid inner mold 2. As a result, temperature rises in the base tire BT can be actively suppressed, which is advantageous in further suppressing heat degradation of the base tire BT.

The base tire BT is supported on the inner side by the rigid inner mold 2 enabling the injection pressure of the unvulcanized rubber R to be set to a value higher than that of when the base tire BT is supported on the inner side by a vulcanization bladder. As such, the injection time can be decreased and tire productivity improved. Additionally, sufficient dispersion of the unvulcanized rubber R is easily achieved throughout the entire area of the cavity 11. Thus, this embodiment is advantageous for molding complicated patterns. All of these advantages also help improve the dimensional precision.

Additionally, the operations of disposing the rigid inner mold 2 in the inner side of the base tire BT and detaching the rigid inner mold 2 from the inner side of the manufactured pneumatic tire T can be performed outside of the vulcanization mold 10A. Thus, mechanisms for such operations are not required to be provided in the manufacturing device 1, this being advantageous in simplifying the manufacturing device 1.

A studless tire may be manufactured using a rubber compound for studless tires as the unvulcanized rubber R in a similar manner to that of the embodiment described above. Additionally, a typical existing pneumatic tire with the rubber of the tread portion TR removed may be used in a similar manner to that of the embodiment described above.

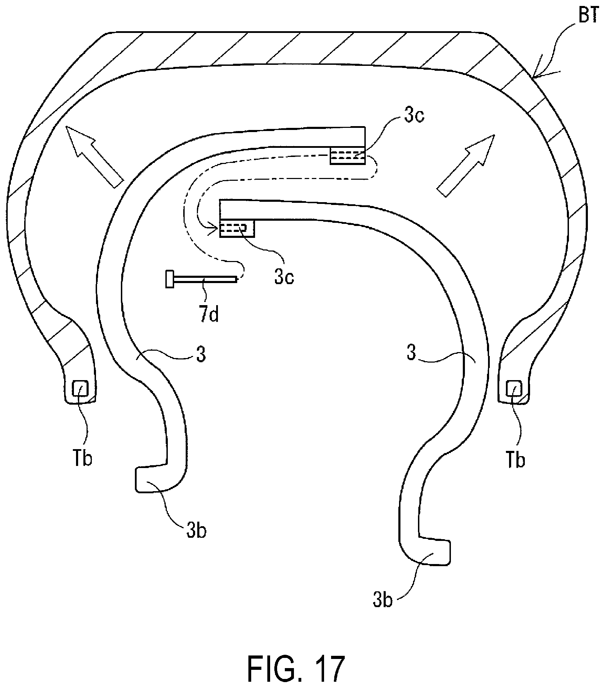

The rigid inner mold 2 used in this embodiment has a structure that, instead of expanding or contracting, is simplified by separating and dividing the individual segments 3. However, the structure of the rigid inner mold 2 is not limited to that of this embodiment and various structures can be employed. For example, the rigid inner mold 2 illustrated in FIGS. 17 to 19 may be used.

This rigid inner mold 2 is cylindrical and is constituted by a plurality of segments 3 divided in the circumferential direction. Additionally, the cylindrical circumferential surface of the segments 3 are divided in half in the width direction.

The segments 3 divided in the width direction both include a coupling portion 3c formed on the inner circumferential surfaces of opposing end portions, respectively. In each of these coupling portions 3c, an insert hole is formed in which a coupling member 7d such as a bolt or pin is inserted. Both of these insert holes may be through-holes or one can be a through-hole and the other be a hole with one end portion closed.

As illustrated in FIG. 17, to dispose the rigid inner mold 2 in the inner side of the base tire BT, the separated and divided segments 3 are inserted in the base tire BT. Next, the outer circumferential surface of the segments 3 divided in the width direction is brought into contact with the inner circumferential surface of the base tire BT, and the coupling portions 3c are matched up. Thereafter, the coupling member 7d is inserted from one coupling portion 3c to the other coupling portion 3c to set the segments 3 in a predetermined position with respect to the base tire BT. In this set state, inner circumferential edge portions 3b of the segments 3 are disposed on the inner circumferential side of the bead portions Tb in contact with the bead portions Tb of the base tire BT.

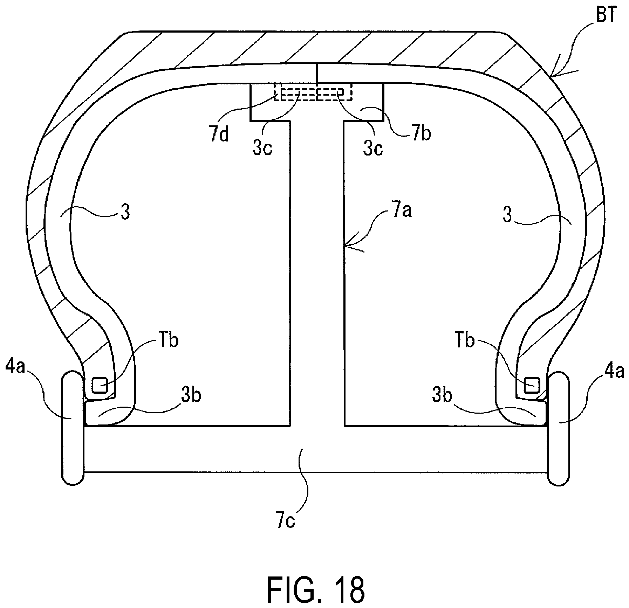

Next, as illustrated in FIG. 18, the radially extending support arm 7a is inserted in the inner side of the base tire BT, and an engaging portion 7b on the tip end of the support arm 7a engages with the coupling portions 3c, 3c with which the coupling member 7d communicates. A shaft portion 7c on the rear end of the support arm 7a extends in the tire width direction. The both end portions of the shaft portion 7c are located at the bead portions Tb of the base tire BT, respectively. The both end portions of the shaft portion 7c engage with an annular holding ring 4a that engages with the edge portions 3b of the segments 3 to fix the segments 3 to the inner side of the base tire BT. The bead portions Tb of the base tire BT are sandwiched between the rigid inner mold 2 and the holding ring 4a.

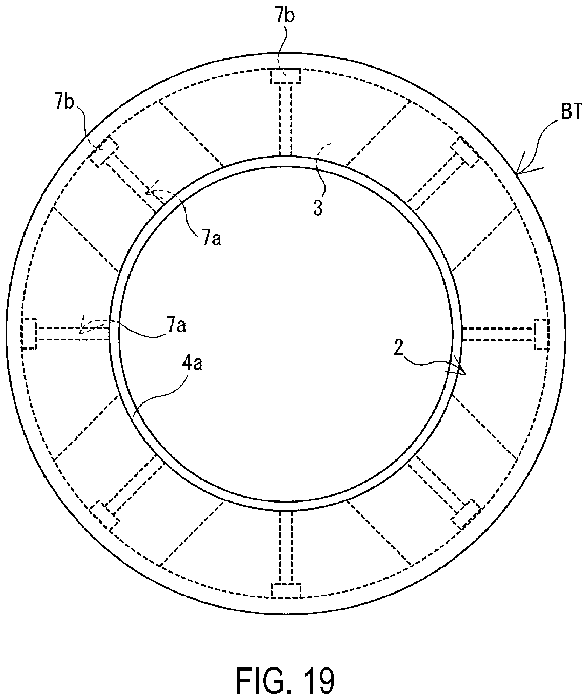

In a similar manner, by sequentially fixing the segments 3 adjacent to one another in the circumferential direction to the inner side of the base tire BT, as illustrated in FIG. 19, the cylindrical rigid inner mold 2 is disposed on the inner side of the base tire BT. The segments 3 adjacent in the circumferential direction may be coupled on the inner circumferential side via an appropriate coupling member if necessary. To detach the rigid inner mold 2 from the manufactured pneumatic tire T, the steps described above of disposing the rigid inner mold 2 on the inner side of the base tire BT may be performed in reverse. Accordingly, the operations of disposing the rigid inner mold 2 in the inner side of the base tire BT and detaching the rigid inner mold 2 from the inner side of the manufactured pneumatic tire T can be performed outside of the vulcanization mold 10A. Note that the cooling path 8 described above can also be provided in this rigid inner mold 2, and a configuration in which cooling medium is supplied from the cooler 9 is also possible.

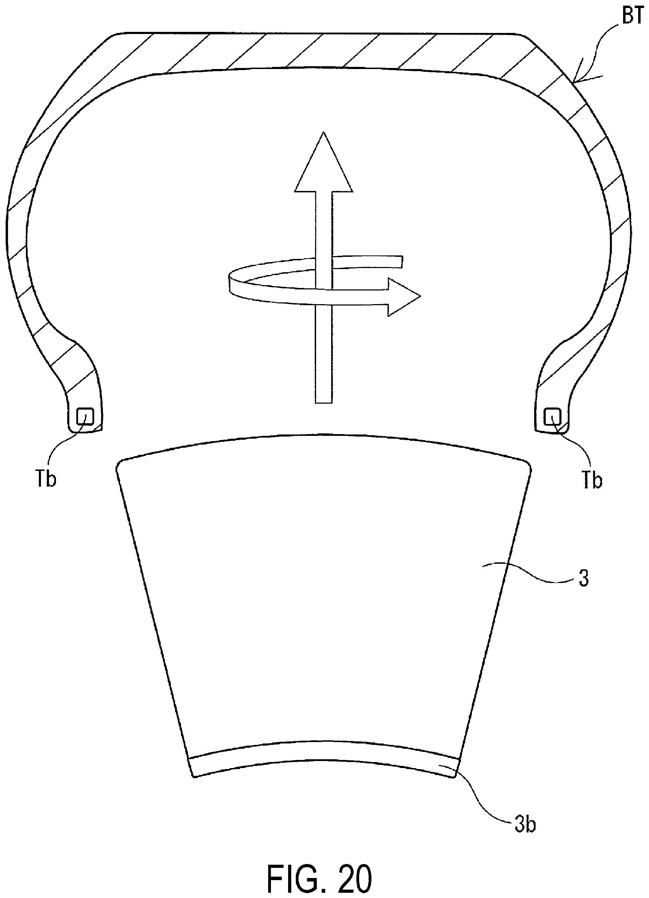

FIGS. 20 to 22 illustrate another cylindrical rigid inner mold 2. This rigid inner mold 2 is constituted by a plurality of segments 3 divided in the circumferential direction. The circumferential length of the segments 3 is generally less than the interval between the pair of bead portions Tb of the base tire BT.

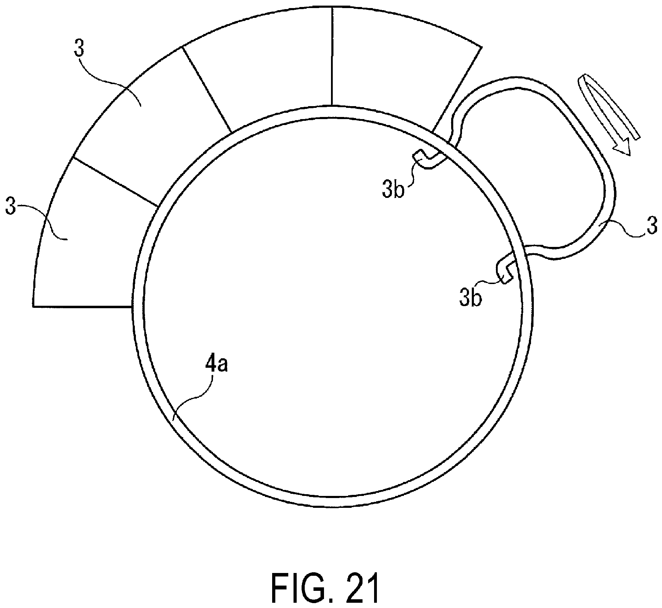

As illustrated in FIGS. 20 and 21, to dispose the rigid inner mold 2 on the inner side of the base tire BT, the separated and divided segments 3 are inserted in the inner side of the base tire BT with the circumferential direction of the segments 3 facing the width direction of the base tire BT. Next, the segments 3 are turned so that the circumferential direction faces the circumferential direction of the base tire BT. The segments 3 are set in a predetermined position with respect to the base tire BT with the outer circumferential surface of the segments 3 in contact with the inner circumferential surface of the base tire BT. In this set state, inner circumferential edge portions 3b of the segments 3 are disposed on the inner circumferential side of the bead portions Tb in contact with the bead portions Tb of the base tire BT. The edge portions 3b engage with the annular holding ring 4a disposed in close proximity to the bead portions Tb of the base tire BT and the segments 3 are fixed to the inner side of the base tire BT. The bead portions Tb of the base tire BT are sandwiched between the rigid inner mold 2 and the holding ring 4a.

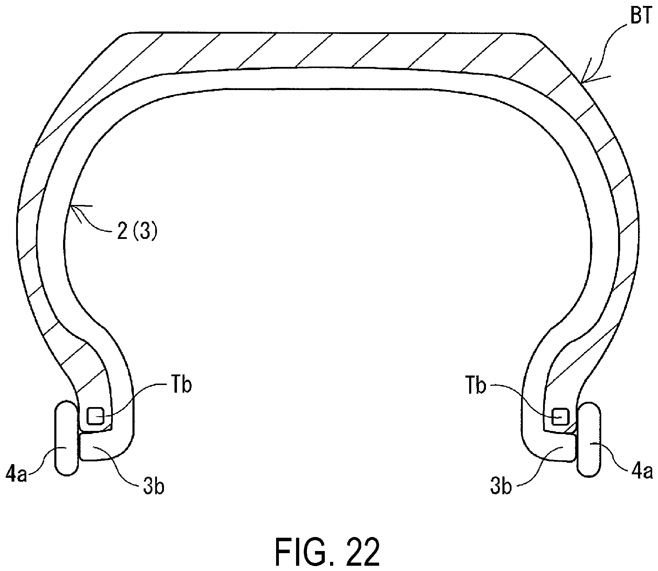

In a similar manner, by sequentially fixing the segments 3 adjacent to one another in the circumferential direction to the inner side of the base tire BT, as illustrated in FIG. 22, the cylindrical rigid inner mold 2 is disposed on the inner side of the base tire BT. The segments 3 adjacent in the circumferential direction may be coupled on the inner circumferential side via an appropriate coupling member if necessary. To detach the rigid inner mold 2 from the manufactured pneumatic tire T, the steps described above of disposing the rigid inner mold 2 on the inner side of the base tire BT may be performed in reverse. The operations of disposing the rigid inner mold 2 in the inner side of the base tire BT and detaching the rigid inner mold 2 from the inner side of the manufactured pneumatic tire T can be performed outside of the vulcanization mold 10A. Note that the cooling path 8 described above can also be provided in this rigid inner mold 2, and a configuration in which cooling medium is supplied from the cooler 9 is also possible.

### Reference Signs List

- 1: Manufacturing device
- 2: Rigid inner mold
- 3: Segment
- 3A: Long segment
- 3B: Short segment
- 3a: Auxiliary plate
- 3b: Edge portion
- 3c: Coupling portion
- 4: Rotation mechanism
- 4a: Holding ring
- 5: Central shaft
- 5a: Cylinder
- 6a, 6b: Support plate
- 7: Support rib
- 7a: Support arm
- 7b: Engaging portion
- 7c: Shaft portion
- 7d: Coupling member
- 8: Cooling path
- 9: Cooler
- 10: Tread mold
- 10A: Vulcanization mold
- 10a: Segmented mold
- 11: Cavity
- 12: Introduction path
- 13: Injector
- 13a: Cylinder
- 13b: Plunger
- 14: Heating path
- 15: Heater
- BT: Base tire
- T: Pneumatic tire
- Tb: Bead portion
- TR: Tread portion
- R: Unvulcanized rubber

## Claims

1. A method of manufacturing a pneumatic tire, comprising the steps of:
bringing an expandable/contractible rigid inner mold made of metal into contact with a tire inner surface across an area corresponding to a tread portion of a base tire by disposing the rigid inner mold on an inner side of the base tire;
covering an outer circumferential surface of the base tire corresponding to the tread portion with a tread mold;
injecting unvulcanized rubber into a cavity of the tread mold; and
via vulcanization of the unvulcanized rubber, forming a tread portion on the outer circumferential surface of the base tire and integrating the tread portion with the outer circumferential surface.

2. The method of manufacturing a pneumatic tire according to claim 1, wherein
the rigid inner mold is constituted by a plurality of segments divided in a circumferential direction; and
the plurality of segments are disposed at an expanded diameter position in contact with the tire inner surface across the area corresponding to the tread portion of the base tire.

3. A method of manufacturing a pneumatic tire, comprising the steps of:
bringing a cylindrical rigid inner mold made of metal into contact with a tire inner surface across an area corresponding to a tread portion of a base tire by disposing the rigid inner mold on an inner side of the base tire, the rigid inner mold being divisible in a circumferential direction;
disposing the base tire in a vulcanization mold together with the rigid inner mold to cover an outer circumferential surface of the base tire corresponding to the tread portion with the vulcanization mold;
injecting unvulcanized rubber into a cavity formed between an inner circumferential surface of the vulcanization mold and the outer circumferential surface of the base tire;
via vulcanization of the unvulcanized rubber, forming a tread portion on the outer circumferential surface of the base tire and integrating the tread portion with the outer circumferential surface to manufacture a pneumatic tire;
removing the manufactured pneumatic tire out of the vulcanization mold together with the rigid inner mold disposed on the inner side of the pneumatic tire; and
outside of the vulcanization mold, detaching the rigid inner mold from the inner side of the pneumatic tire.

4. The method of manufacturing a pneumatic tire according to claim 3,
wherein
upon disposing the base tire in the vulcanization mold together with the rigid inner mold, a cylinder of an injector is filled with the unvulcanized rubber to be injected, in the cylinder, a plunger being provided.

5. The method of manufacturing a pneumatic tire according to any one of claims 1 to 4, wherein
the unvulcanized rubber is injected and vulcanized while the inner side of the base tire is cooled through the rigid inner mold.

6. The method of manufacturing a pneumatic tire according to any one of claims 1 to 5, wherein
the base tire is formed by removing rubber of a tread portion of an existing pneumatic tire.

7. The method of manufacturing a pneumatic tire according to any one of claims 1 to 6, wherein
a studless tire is manufactured using a rubber compound for studless tires as the unvulcanized rubber.

8. The method of manufacturing a pneumatic tire according to claim 7 when dependent on claim 6, wherein
the existing pneumatic tire is a studless tire; and
as the unvulcanized rubber, a rubber compound different from a rubber compound used in a tread portion of the existing studless tire is used.

9. The method of manufacturing a pneumatic tire according to claim 8,
wherein the rubber compound used in the tread portion of the existing studless tire and a rubber compound of the tread portion formed on the outer circumferential surface of the base tire are different in at least one of: hardness, specific gravity, and friction properties under the same conditions.

10. A manufacturing device for a pneumatic tire, comprising:
an expandable/contractible rigid inner mold made of metal disposed on an inner side of a base tire;
a tread mold disposed covering an outer circumferential surface of the base tire corresponding to a tread portion; and
an injector configured to inject unvulcanized rubber into a cavity of the tread mold; wherein
the unvulcanized rubber is injected with the rigid inner mold in contact with a tire inner surface across an area corresponding to the tread portion of the base tire.

11. The manufacturing device for a pneumatic tire according to claim 10, wherein the rigid inner mold is constituted by a plurality of segments divided in a circumferential direction.

12. A manufacturing device for a pneumatic tire, comprising:
a cylindrical rigid inner mold made of metal divisible in a circumferential direction, the rigid inner mold being disposed on an inner side of a base tire;
a vulcanization mold in which the rigid inner mold and the base tire are disposed, the vulcanization mold covering an outer circumferential surface of the base tire corresponding to a tread portion; and
an injector configured to inject unvulcanized rubber into a cavity formed between an inner circumferential surface of the vulcanization mold and the outer circumferential surface of the base tire; wherein
the unvulcanized rubber is injected into the cavity with the rigid inner mold in contact with a tire inner surface across an area corresponding to the tread portion of the base tire;
a tread portion formed by vulcanizing the unvulcanized rubber is integrated with the outer circumferential surface of the base tire to manufacture a pneumatic tire; and
the rigid inner mold disposed on the inner side of the manufactured pneumatic tire is removed out of the vulcanization mold together with the pneumatic tire and detached from the inner side of the pneumatic tire outside of the vulcanization mold.

13. The manufacturing device for a pneumatic tire according to any one of claims 10 to 12, further comprising
a cooling unit configured to cool the rigid inner mold.
